# EUROPÄISCHE PATENTSCHRIFT

(11) **EP 1 497 599 B1**
(45) Veröffentlichungstag und Bekanntmachung des Hinweises auf die Patenterteilung: **23.09.2009**
(21) Anmeldenummer: 03725050.3
(22) Anmeldetag: 17.04.2003
(51) Int. Cl.: F25D 13/06, F25D 3/11

(54) **VORRICHTUNG ZUR ABSAUGUNG VON GAS AUS GEFRIERANLAGEN**
DEVICE FOR REMOVING GAS FROM FREEZING INSTALLATIONS BY SUCTION
DISPOSITIF D'EVACUATION DE GAZ CONTENUS DANS DES INSTALLATIONS FRIGORIFIQUES PAR ASPIRATION

(30) Priorität: 24.04.2002 DE 10218298
(43) Veröffentlichungstag der Anmeldung: 19.01.2005
(73) Patentinhaber: Linde AG, 80331 München (DE)
(72) Erfinder: KAMM, Volker, 82024 Taufkirchen (DE)
(74) Vertreter: Kasseckert, Rainer
(86) Internationale Anmeldenummer: PCT/EP2003/004016
(87) Internationale Veröffentlichungsnummer: WO 2003/091641

(56) Entgegenhaltungen:
- US-A- 3 553 973
- US-A- 4 947 654
- US-A- 5 702 245
- US-A1- 2001 025 495

## Beschreibung

Die Erfindung betrifft eine Vorrichtung zum Abkühlen von Kühlgut mit einem Kühlgutträger, einem Gehäuse und einer Zugabe für ein Kühlmedium in das Innere des Gehäuses sowie mindestens einer Öffnung des Gehäuses zur Zugabe und Entnahme des Kühlguts.

Bekannt sind eine Reihe von Maßnahmen zur Gasführung bei Anlagen zum Abkühlen und Gefrieren von Kühlgut. Das Kühlmedium verlässt in der Regel nach seinem Einsatz zu Kühlzwecken die Anlage im gasförmigen Zustand. Als Kühlmedien kommen bevorzugt Stickstoff oder Kohlendioxid zum Einsatz, besonders sind sie als tiefkalte Gase für diesen Zweck geeignet.

Der Begriff Abkühlen beschreibt einerseits die Abkühlung auf Temperaturen oberhalb des Gefrierpunktes, beispielsweise die Abkühlung wärmebehandelter Lebensmittel von +70 °C auf +2 °C. Abkühlen umfasst aber insbesondere auch gefrieren und tiefgefrieren. Tiefgefrieren (frosten) bedeutet, dass die Lebensmittel für einen ausreichenden Zeitraum einem Kältemedium ausreichend niedriger Temperatur ausgesetzt sind, so dass im Anschluss an den Gefriervorgang eine Kerntemperatur deutlich unterhalb des Gefrierpunktes von Wasser vorliegt, in der Regel unterhalb einer Temperatur von -18 °C.

Das Kältemedium kann z. B. tiefkaltes Gas (verflüssigt oder gasförmig) oder abgekühlte Luft sein. Der Wärmetausch findet dabei in der Regel im Wesentlichen über konvektive Prozesse statt, beim Einsatz von verflüssigtem Gas auch über Wärmeleitung durch direkten Kontakt des Kühlmediums mit dem abzukühlenden Produkt.

Bevorzugt wird das Gas somit verflüssigt in die Abkühlvorrichtung eingebracht und durch einen Wärmeübertrag vom zu kühlenden Gut auf das Kühlmedium verdampft. Das danach wärmere und gasförmige Kühlmedium wird aus der Abkühlvorrichtung abgeführt. Die Abfuhr darf üblicherweise nicht an die Umgebung der Anlage erfolgen, da die genannten Gase die Luft verdrängen und dadurch Menschen in der Umgebung der Anlage gefährden würden. Es muss also aus Sicherheitsgründen eine Ableitung des Gases aus der Arbeitsumgebung einer derartigen Abkühlvorrichtung gewährleistet sein.

Zu diesem Zweck ist es bekannt, das Gas im Inneren einer Abkühlvorrichtung oder direkt ober- oder unterhalb der Eingabe- bzw. Ausgabestelle für Kühlgut abzusaugen. Diesen Maßnahmen ist allerdings der Nachteil gemein, dass oftmals ein Sog in der Abkühlvorrichtung erzeugt wird und dadurch nicht nur erwärmtes Gas, also solches das seinen Kühlzweck bereits erfüllt hat, sondern auch tiefkaltes Gas, das bei längerem Verbleib in der Abkühlvorrichtung noch Wärme hätte aufnehmen können, abgesaugt wird.

Aus der US 3,553,973 ist ein Gefriertunnel gemäß dem Oberbegriff des Anspruchs 1.

Der Erfindung liegt daher die Aufgabe zugrunde, eine Vorrichtung so zu gestalten, dass eine effiziente Nutzung des eingesetzten Kühlmediums erzielt wird, insbesondere die Abfuhr für Kühlmedium verlustarm zu gestalten.

Die gestellte Aufgabe wird dadurch gelöst, dass die Eingangsöffnung des Kanals außerhalb des Gehäuses angeordnet ist.

Ein so angeordneter Kanal bietet den Vorteil, dass das Kühlmedium (beispielsweise Stickstoff oder Kohlendioxid), das bevorzugt verflüssigt in die Vorrichtung zum Abkühlen eingebracht wird und durch Wärmeübertrag vom zu kühlenden Gut auf das Kühlmedium verdampft, unmittelbar nach dem Austritt aus dem Gehäuse abgesaugt wird. Ein großer Vorteile besteht darin, dass im wesentlichen nur erwärmtes, gasförmiges Kühlmedium, also solches das seinen Kühlzweck bereits erfüllt hat, abgeführt wird, während eine Absaugung von Kühlmedium, das noch nicht die vorgesehene Wärmemenge aufgenommen hat, aus dem Inneren des Gehäuses vermieden wird.

Dies wird auch für den Fall zuverlässig vermieden, in dem die Saugleistung des Gebläses größer ist als die pro Zeiteinheit abzuführende Menge an erwärmtem Kühlmedium. Als Differenzmenge wird nämlich in diesem Fall Raumluft aus der Umgebung der Vorrichtung angesaugt, wobei die Ansaugung der Raumluft durch die Anordnung der Eingangsöffnung des Kanals maßgeblich unterstützt wird.

Für diesen Fall ist gemäß einer vorteilhaften Weiterbildung der Erfindung zusätzlich vor dem Gebläse ein Ansaugstutzen zur Ansaugung von Raum- oder Umgebungsluft vorgesehen. Dadurch wird eine Eisbildung im Gebläse vermieden. Eine Eisbildung könnte im Gebläse auftreten, wenn der Feuchtegehalt des angesaugten Gases zu hoch liegt. Aus diesem Grund wird bei Bedarf bevorzugt trockene Raumluft zugemischt.

Ein Weiterer Vorteil besteht darin, dass durch die erfindungsgemäße seitliche Anordnung des Kanals ein Kontakt des Kühlguts mit Kondenswasser verhindert wird, das beim Kontakt des Gases mit der vergleichsweise warmen Oberfläche des Kanals während der Absaugung im Kanal entsteht.

Bevorzugt weist der Kanal einen rechteckigen Querschnitt auf. Besonders bevorzugt weist Eingangsöffnung des Kanals einen rechteckigen Querschnitt auf. Dabei ist die längere Seite dieses Rechtecks vorteilhaft im Wesentlichen parallel zur Längsachse des Kühlgutträgers angeordnet.

Diese Ausgestaltung ermöglicht eine sehr effiziente Ableitung des aus der Öffnung des Gehäuses austretenden Gases ohne die Strömungsverhältnisse innerhalb der Öffnung zu beeinflussen. Mit besonderem Vorteil ist diese Ausgestaltung dazu geeignet, die Ansaugung einer Differenzmenge an Raumluft zusätzlich zu erleichtern. Der Fall, in dem eine solche Ansaugung von Raumluft gewünscht ist, wurde bereits beschrieben.

Gemäß einer anderen vorteilhaften Ausgestaltung der Erfindung weist der Kanal einen runden oder elliptischen Querschnitt auf. Der Vorteil ergibt sich dabei aus der Abstimmung der Querschnittsform des Kanals auf die Geometrie der Öffnung des Gehäuses, so dass eine möglichst vollständige Absaugung erzielt wird.

Zweckmäßigerweise ist der Kühlgutträger als Transportband ausgebildet. Das Kühlgut wird während der Abkühlung z. B. durch einen Tunnelfroster oder einen Spiralfroster bewegt.

Eine andere zweckmäßige Ausgestaltung der Erfindung sieht als Kühlgutträger eine Folie vor, die bevorzugt wie ein Transportband durch den Froster bewegt wird.

Eine weitere zweckmäßige Ausgestaltung der Erfindung sieht als Kühlgutträger einen Strom aus flüssigem Stickstoff vor, der durch den Froster strömt und das Kühlgut auf oder im flüssigen Stickstoff schwimmend oder tauchend bewegt.

In einer weiteren vorteilhaften Ausgestaltung der Erfindung weist der Kanal ein Gefälle auf, das von der Eingangsöffnung, die seitlich neben der Öffnung des Gehäuses angeordnet ist, zu einer tiefsten Stelle hin ab, an der ein Ablaufstutzen zur Ableitung von Flüssigkeit, insbesondere ein Ablaufstutzen zur Ableitung von Kondenswasser und/oder Reinigungslösung, angebracht ist. Dadurch wird ein unerwünschter Kontakt der Flüssigkeit mit dem Kühlgut zuverlässig verhindert.

Gemäß einer besonders zweckmäßigen Gestaltung der Erfindung sind zwei Kanäle vorgesehen, insbesondere zwei Kanäle, die seitlich neben der Öffnung und einander gegenüber liegend angeordnet sind. Dadurch wird der Vorteil einer besonders gleichmäßigen Abfuhr des Gases erzielt.

Die Erfindung bietet eine Reihe weiterer Vorteile:

Durch die erfindungsgemäße Absaugung werden die Strömungsverhältnisse im Inneren des Gehäuses, in dem die Abkühlung stattfindet, nicht beeinträchtigt und es wird kein unerwünschter Sog im Inneren des Gehäuses erzeugt. Dadurch ist eine sehr effiziente Nutzung des Kühlmediums möglich. Der Bedarf an Kühlmedium ist im Vergleich zu herkömmlichen Lösungen deutlich vermindert. Daher bietet die Erfindung große Vorteile im Bereich der Energieeffizienz und des sparsamen Einsatzes von Betriebsstoffen (z. B. Kühlmedium).

Mit der Erfindung wird darüber hinaus auf einfache Weise ein hohes Maß an hygienischen Anforderungen erfüllt. Außerdem ist dafür gesorgt, dass das Personal, das den Froster mit Kühlgut bestückt, vor Verletzungen geschützt wird. Ebenso wird durch die erfindungsgemäße Gestaltung der Absaugung zuverlässig verhindert, dass versehentlich neben das Transportband fallendes Kühlgut in die Absaugung gerät.

Die Erfindung sowie weitere Einzelheiten der Erfindung werden im Folgenden anhand eines in den Zeichnungen dargestellten Ausführungsbeispiels näher erläutert. Hierbei zeigen die
- Figur 1: Seitenansicht einer erfindungsgemäßen Vorrichtung
- Figur 2: Vorderansicht einer erfindungsgemäßen Vorrichtung
- Figur 3: Draufsicht auf eine erfindungsgemäße Vorrichtung

Die Figuren zeigen als Beispiel für eine erfindungsgemäße Vorrichtung einen Tunnelfroster 1 mit zwei Kanälen 2 zur Absaugung des aus der Öffnung 3 austretenden Gases.

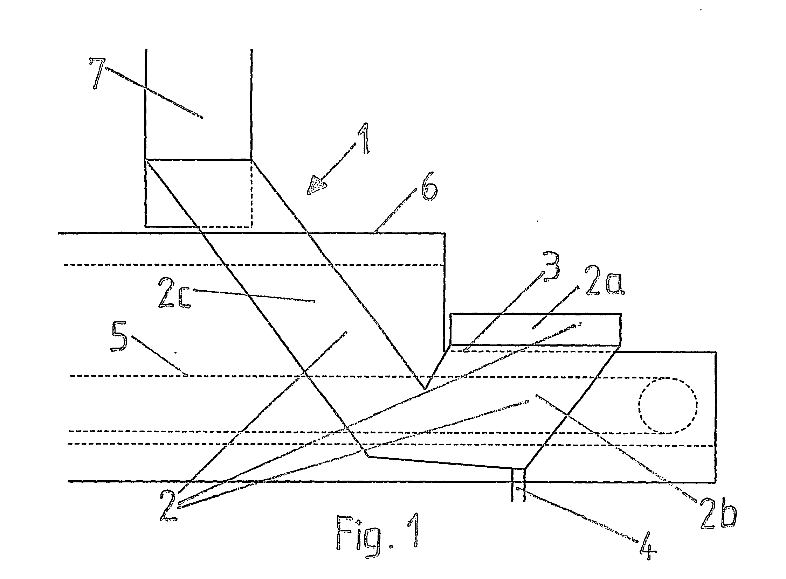

Im Einzelnen zeigt die Figur 1 eine Seite des Kanals 2, der einen Eingangsabschnitt 2a, einen nach unten geneigten Abschnitt 2b, einen ansteigenden Abschnitt 2c und einen Ablaufstutzen 4 für Kondenswasser aufweist. Das Kühlgut (nicht dargestellt) wird auf dem Transportband 5 liegend mit Hilfe eines Kühlmediums (z. B. Kohlendioxid) abgekühlt. Dazu wird beispielsweise flüssiges Kohlendioxid in das Innere des Gehäuses 6 des Tunnelfrosters 1 zugeführt und dort in Wärmetausch mit dem Kühlgut gebracht.

Bei diesem Wärmetausch wird durch einen Wärmeübertrag vom zu kühlenden Gut auf das Kühlmedium, z. B. Kohlendioxid, das Kühlmedium verdampft. Das Kohlendioxid nimmt also Wärme auf, die dem Kühlgut entzogen wird, wodurch die Temperatur des Kühlguts sinkt und die Temperatur des Kohlendioxids steigt. Dadurch wird das flüssige Kohlendioxid verdampft. Das gasförmige Kohlendioxid tritt aus dem Gehäuse 6 aus und wird in die Eingangsöffnungen 9 der beiden Kanäle 2 hinein gesaugt, die über die Zuleitung 7 mit einem Gebläse (nicht dargestellt) in Wirkverbindung stehen.

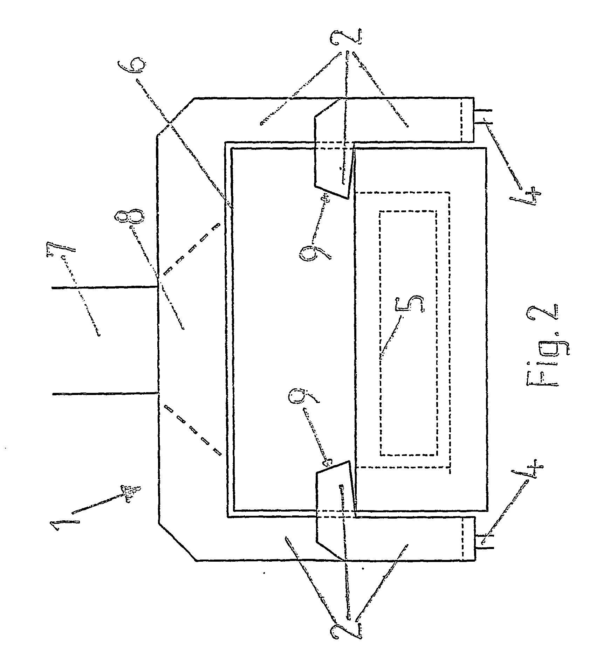

Vorteilhaft sind die beiden Kanäle 2 in diesem Beispiel nach den ansteigenden Abschnitten 2c und vor der Zuleitung 7 zusammengeführt, so dass sie beide mit dem gleichen Gebläse in Wirkverbindung stehen. Diese Zusammenführung 8 ist in der Figur 2 gut zu erkennen.

Ein großer Vorteil besteht darin, dass im Wesentlichen nur das beschriebene erwärmte und gasförmige Kohlendioxid angesaugt wird, das seinen Kühlzweck bereits erfüllt hat. Eine Absaugung von Kühlmedium aus dem Inneren des Gehäuses, das noch nicht die vorgesehene Wärmemenge aufgenommen hat, wird durch die erfindungsgemäße Anordnung und Ausgestaltung der Eingangsöffnung 9 vermieden.

Dies wird auch für den Fall zuverlässig vermieden, in dem die Saugleistung des Gebläses größer ist als die pro Zeiteinheit abzuführende Menge an erwärmtem Kohlendioxid. Als Differenzmenge wird nämlich in diesem Fall Raumluft aus der Umgebung der Vorrichtung angesaugt, wobei die Ansaugung der Raumluft besonders durch die langgestreckte Formgebung der Eingangsöffnung 9 und des Querschnitts der beiden Kanäle 2, sowie deren seitliche Anordnung unterstützt wird.

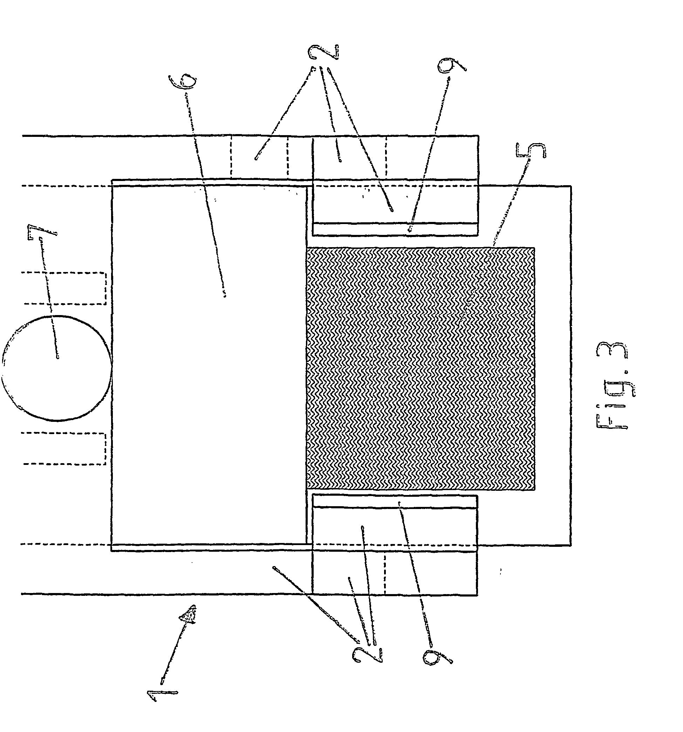

Aus den Figuren 2 und 3 geht hervor, dass die Öffnung 3 das Gehäuse 6 in einer vom Transportband 5 vertikal beabstandeten, zum Transportband 5 im Wesentlichen parallel angeordneten Ebene durchbricht und die Kanäle 2 mit den Eingangsöffnungen 9 mit geringem Abstand oberhalb dieser Ebene angeordnet sind. In einer ebenfalls zweckmäßigen Ausführungsform könnten die Kanäle 2 jedoch auch direkt an diese Ebene anschließen.

In der Figur 2 ist zusätzlich eine besonders vorteilhafte Ausgestaltung der Eingangsöffnung 9 dargestellt. Die Eingangsöffnung 9 ist von den Wänden des Eingangsabschnitts 2a so begrenzt, dass die dem Boden zugewandte Wand ihren höchsten Punkt an der Eingangsöffnung 9 aufweist und die gegenüber liegende Wand nach außen versetzt und höher angeordnet ist. Dadurch wird erreicht dass eine an der inneren Oberfläche der Wände kondensierende Flüssigkeit nicht aus dem Kanal 2 durch die Eingangsöffnung 9 heraus fließen kann, sondern gezwungen ist in den Kanal 2 hinein zu fließen. Diese Flüssigkeit, die von dem Kühlgut, von der Reinigungslösung oder von dem Feuchtegehalt des abzuführenden gasförmigen Kohlendioxids herrührt, kann über den Ablaufstutzen 4 aus dem Kanal 2 abgeführt werden.

In der Figur 2 wird ein weiterer Vorteil der Erfindung deutlich: Durch die flache Gestaltung des Eingangsabschnitts 2a ist die Öffnung 3, die als Zugabe und /oder Entnahme für das Kühlgut genutzt wird, für das Bedienpersonal, das das Transportband 5 z. B. mit Kühlgut bestückt, gut zugänglich.

Figur 3 zeigt in der Draufsicht die seitliche Anordnung der Kanäle 2 links und rechts der Öffnung 3, durch die man auf das Transportband 5 sehen kann. Die Eingangsöffnung 9 ist in dieser Darstellung ebenfalls von der offenen Seite her zu sehen, wodurch man im Bereich der Eingangsöffnung 9 ins Innere des Eingansabschnitts 2a der Kanäle 2 sehen kann. Die Öffnung des Gehäuses ist also von den Eingangsöffnungen 9 der Kanäle 2 links und rechts flankiert.

Besonders beim Einsatz von Kohlendioxid besteht ein weiterer Vorteil: Das Vermeiden einer Sogwirkung innerhalb des Gehäuses verhindert einen unerwünschten Druckabfall in diesem Bereich, der die Bildung von störendem Kohlendioxidschnee zur Folge haben könnte.

Die Figuren das offene Ende eines Tunnelfrosters. Für den Fall, dass ein an zwei Enden offener Froster zum Einsatz kommt, ist vorteilhaft an beiden Enden eine Absaugung von Kühlmedium vorzusehen. Darüber hinaus kann es in bestimmten Fällen auch von Vorteil sein, bei mehreren Öffnungen der Abkühlvorrichtung nur an einer Öffnung eine Absaugung vorzusehen.

## Patentansprüche

1. Vorrichtung (1) zum Abkühlen von Kühlgut mit einem Kühlgutträger (5), einem Gehäuse (6) und einer Zugabe für ein Kühlmedium in das Innere des Gehäuses (6) sowie mindestens einer Öffnung (3) des Gehäuses (6) zur Zugabe und Entnahme des Kühlguts, wobei im Bereich der Öffnung (3) mindestens ein Kanal (2) zur Aufnahme von Kühlmedium vorgesehen ist, der mit einem saugseitigen Anschluss eines Gebläses in Wirkverbindung steht und der eine Eingangsöffnung (9) aufweist, die seitlich neben der Öffnung (3) des Gehäuses (6) angeordnet ist, **dadurch gekennzeichnet, dass** die Eingangsöffnung (9) außerhalb des Gehäuses angeordnet ist.

2. Vorrichtung nach Anspruch 1, **dadurch gekennzeichnet, dass** der Kanal (2) einen rechteckigen Querschnitt aufweist.

3. Vorrichtung nach Anspruch 1 oder 2, **dadurch gekennzeichnet, dass** die Eingangsöffnung (9) des Kanals (2) einen rechteckigen Querschnitt aufweist und die längere Seite dieses Rechtecks im Wesentlichen parallel zur Längsachse des Kühlgutträgers (5) angeordnet ist.

4. Vorrichtung nach einem der Ansprüche 1 bis 3, **dadurch gekennzeichnet, dass** der Kühlgutträger (5) als Transportband (5) ausgebildet ist.

5. Vorrichtung nach einem der Ansprüche 1 bis 4, **dadurch gekennzeichnet, dass** der Kanal (2) ein Gefälle aufweist, das von der Eingangsöffnung (9), die seitlich neben der Öffnung (3) des Gehäuses (6) angeordnet ist, zu einer tiefsten Stelle hin abfällt, an der ein Ablaufstutzen (4) zur Ableitung von Flüssigkeit, insbesondere ein Ablaufstutzen (4) zur Ableitung von Kondenswasser, angebracht ist.

6. Vorrichtung nach einem der Ansprüche 1 bis 5, **dadurch gekennzeichnet, dass** zwei Kanäle (2) vorgesehen sind, insbesondere zwei Kanäle (2), die seitlich neben der Öffnung (3) und einander gegenüber liegend angeordnet sind.

## Claims

1. Device (1) for the cooling of refrigeration stock, with a refrigeration-stock carrier (5), with a housing (6) and with a feed for a cooling medium into the interior of the housing (6), and also with at least one orifice (3) in the housing (6) for the feed and removal of the refrigeration stock, there being provided in the region of the orifice (3), for the reception of cooling medium, at least one duct (2) which is operatively connected to a suction-side connection of a blower and which has an inlet orifice (9) which is arranged laterally next to the orifice (3) in the housing (6), **characterized in that** the inlet orifice (9) is arranged outside the housing.

2. Device according to Claim 1, **characterized in that** the duct (2) has a rectangular cross section.

3. Device according to Claim 1 or 2, **characterized in that** the inlet orifice (9) of the duct (2) has a rectangular cross section, and the longer side of this rectangle is arranged essentially parallel to the longitudinal axis of the refrigeration-stock carrier (5).

4. Device according to one of Claims 1 to 3, **characterized in that** the refrigeration-stock carrier (5) is designed as the conveyor belt (5).

5. Device according to one of Claims 1 to 4, **characterized in that** the duct (2) has a slope which descends from the inlet orifice (9), which is arranged laterally next to the orifice (3) in the housing (6), towards a lowest point at which an outflow connection piece (4) for the discharge of liquid, in particular an outflow connection piece (4) for the discharge of condensation water, is mounted.

6. Device according to one of Claims 1 to 5, **characterized in that** two ducts (2) are provided, in particular two ducts (2) which are arranged laterally next to the orifice (3) and lie opposite one another.

## Revendications

1. Dispositif (1) pour refroidir des produits à refroidir avec un support de produits à refroidir (5), un boîtier (6) et une alimentation pour un réfrigérant à l'intérieur du boîtier (6) ainsi qu'au moins une ouverture (3) du boîtier (6) pour l'alimentation et l'évacuation du produit à refroidir, au moins un canal (2) pour recevoir le réfrigérant étant prévu dans la région de l'ouverture (3), étant en liaison fonctionnelle avec un raccord côté aspiration d'une soufflante, et présentant une ouverture d'entrée (9) qui est disposée latéralement à côté de l'ouverture (3) du boîtier (6), **caractérisé en ce que** l'ouverture d'entrée (9) est disposée en dehors du boîtier.

2. Dispositif selon la revendication 1, **caractérisé en ce que** le canal (2) présente une section transversale rectangulaire.

3. Dispositif selon la revendication 1 ou 2, **caractérisé en ce que** l'ouverture d'entrée (9) du canal (2) présente une section transversale rectangulaire et le côté plus long de ce rectangle est disposé essentiellement parallèlement à l'axe longitudinal du support de produits à refroidir (5).

4. Dispositif selon l'une quelconque des revendications 1 à 3, **caractérisé en ce que** le support de produits à refroidir (5) est réalisé sous forme de bande transporteuse (5).

5. Dispositif selon l'une quelconque des revendications 1 à 4, **caractérisé en ce que** le canal (2) présente une pente qui descend depuis l'ouverture d'entrée (9) qui est disposée latéralement à côté de l'ouverture (3) du boîtier (6), jusqu'à un point plus bas, au niveau duquel une tubulure d'écoulement (4) est montée pour évacuer le liquide, notamment une tubulure d'écoulement (4) pour évacuer de l'eau de condensation.

6. Dispositif selon l'une quelconque des revendications 1 à 5, **caractérisé en ce que** deux canaux (2) sont prévus, en particulier deux canaux (2) qui sont disposés latéralement à côté de l'ouverture (3) et en regard l'un de l'autre.
